# EUROPEAN PATENT APPLICATION

(11) **EP 1 324 241 A1**
(43) Date of publication of application: **02.07.2003**
(21) Application number: 01961265.4
(22) Date of filing: 31.08.2001
(51) Int. Cl.: G06F 17/60, B65G 61/00

(54) **FREIGHT TRACKING METHOD AND FREIGHT TRACKING SYSTEM**

(30) Priority: 01.09.2000 JP 2000266264
(71) Applicant: Sagawa Express Co., Ltd., Kyoto-shi, Kyoto 601-8104 (JP)
(72) Inventor: KUMAKAWA, Takayasu, c/o Sagawa Express Co., Ltd., Kyoto-shi, Kyoto 601-8104 (JP)
(74) Representative: HOFFMANN - EITLE
(86) International application number: JP0107550
(87) International publication number: WO02019195

(57) **Abstract**

In this cargo tracking system, drivers and stations have PDTs 1a, 1b, .... A computer of a consolidating station 2a, a computer of a way station 3 (way station 3a or a hub center 3b), a computer of a delivery station 4 and a center 5 are connected by a special line 6. The PDTs 1a, 1b, ... transmit point information Pi, discussed later, to the respective stations using MCA (Multi-Channel Access) radio sets. These computers transmit the point information Pi obtained by the PDTs 1a, 1b, ... each time when Pi is transmitted to the center 5 using the special line 6.

The host computer of the center 5 stores the point information Pi from the consolidating station 2, the way station 3 or the delivery station 4. The host computer of the center 5 provides point management information according to an access request from a personal computer at a branch office 10.

## Description

### Technical Field

The present invention relates to a cargo tracking system from which a consignor, a consignee or personnel of an express company who uses a network or a general user who utilizes the internet can quickly and easily know a current location of cargo shipped from the consignor.

### Background Art

Generally in an express service, a client (hereinafter, referred to as a consignor) fills predetermined items (name of consignor, address of consignor, address of consignee, name of consignee and the like) in a book on shipping voucher having a plurality of plural consignment notes and attaches a completed consignment note to a cargo to be shipped.

A driver loads the cargo into a pickup vehicle and carries it to a consolidating station (small receiving station) and transships the cargo into another carry vehicle so as to carry it to a way station (large receiving station). Next, the driver carries the cargo from the way station to a delivery station near the residence of the consignee via a vehicle, and carries it therefrom to the consignee via an express vehicle. At this time, the consignor and the consignee receive one copy of the shipping voucher of the consignment notes.

However, in the above express service, since only a copy of the consignment notes is handed to the consignor and the consignee in the delivery process, in the case where the consignor or the consignee makes an inquiry to the express company about a delay or the like of the cargo, a clerk of the express company must phone to each station on the route which the vehicle, loaded with the cargo, passes based on an inquiry number (referred to also as a delivery number) of the consignment notes as informed by the consignor or the consignee, and determines a current location of the cargo, and as a result, informs the consignor or the consignee about the estimated date and time of arrival of the cargo.

Therefore, since a clerk of the express company should phone and inquire of each station about where the cargo is in order to inform the consignor or the consignee who has inquired about the estimated date and time of arrival, there arises a problem that such a procedure requires a lot of labor and time.

In addition, since clerks of the respective stations who receive the inquiry must find the inquired consignment note out of a large number of consignment notes, a very long time is required for the clerks of the respective stations to locate the consignment note, thereby resulting in a problem that working cost unreasonably increases.

Further, there is a possibility that the consignor or the consignee may make an inquiry at any moment. For this reason, several clerks should always stand by in the respective stations, thereby creating an additional problem of increased the cost .

### Disclosure of the Invention

The present invention is devised in order to solve the above problems, and it is an object of the present invention to provide a cargo tracking system in which a consignor, a consignee or personnel of an express company can easily know a current location of a cargo shipped from the consignor.

A cargo tracking method of the present invention tracks a location of a cargo to which consignment notes prepared by an in-country or overseas consignor are attached when the cargo is delivered to a consignee identified in the consignment notes while the cargo is being loaded into or unloaded from pickup vehicles at respective stations.

A point information transmitting process transmits consignment note number and type of work performed, i.e., loading, unloading, delivery, etc., of the vehicles or at the stations location as point information every time when the cargo is loaded into the pickup vehicles or is unloaded at the stations.

A point management information creating step at the stations receives the point information and relates the point information to the consignment note number in the corder of reception so as to store the point information, and transform the point information as point management information for each consignment note.

When a request for the point management information of the consignment note number is made, a point information providing step provides the point information of the consignment note number as requested through a communication network used by a request source in a predetermined form.

In addition, a cargo tracking system of the present invention collects data at the time of loading or unloading a cargo, to which a consignment note prepared by an in-country or overseas consignor is attached, via a network and tracks a location of the cargo from the collected data when the cargo is delivered to a consignee identified in the consignment note.

A plurality of portable terminals is provided to drivers of the respective pickup vehicles and stations by whom and where the cargo is loaded, unloaded or delivered, and provides a consignment note number of the cargo, work types showing loading or unloading of the pickup vehicles or at the stations as point information at the time of loading, unloading and delivering the cargo.

A transmission device is provided to each of the delivery vehicles and each of the stations, and transmits the point information obtained by the portable terminals each time when the portable terminals are connected to the transmission device.

A point information management device is connected to the network, and receives the point information from the transmission devices at the stations or the pickup vehicles and relates the point information to the consignment note number so as to store the point information in an order of reception, and transmits the point management information to the network. A server is connected to the network and stores the point management information from the point management device when the consignment note number and the point management information are requested, the information is provided in a predetermined form to a terminal where the request is made.

### Brief Description of the Drawings

Fig. 1 is a schematic structural diagram of a cargo tracking system according to an embodiment 1.
Fig. 2 is a concrete structure of a cargo tracking device according to the embodiment 1.
Fig. 3 is a sequence diagram of the cargo tracking system according to the embodiment 1.
Fig. 4 is a sequence diagram explaining an operation of the cargo tracking system according to the embodiment 1.
Fig. 5 is an explanatory diagram explaining point data.
Fig. 6 is an explanatory diagram of point management information.
Fig. 7 is an explanatory diagram explaining a user service screen.
Fig. 8 is a schematic structural diagram of the cargo tracking system according to an embodiment 2.
Fig. 9 is a schematic structural diagram of the cargo tracking system according to an embodiment 3.
Fig. 10 is an explanatory diagram explaining image data in the embodiment 3.
Fig. 11 is an explanatory diagram explaining the point management information with image data in the embodiment 3.

### Best Mode for Carrying out the Invention

### Embodiment 1

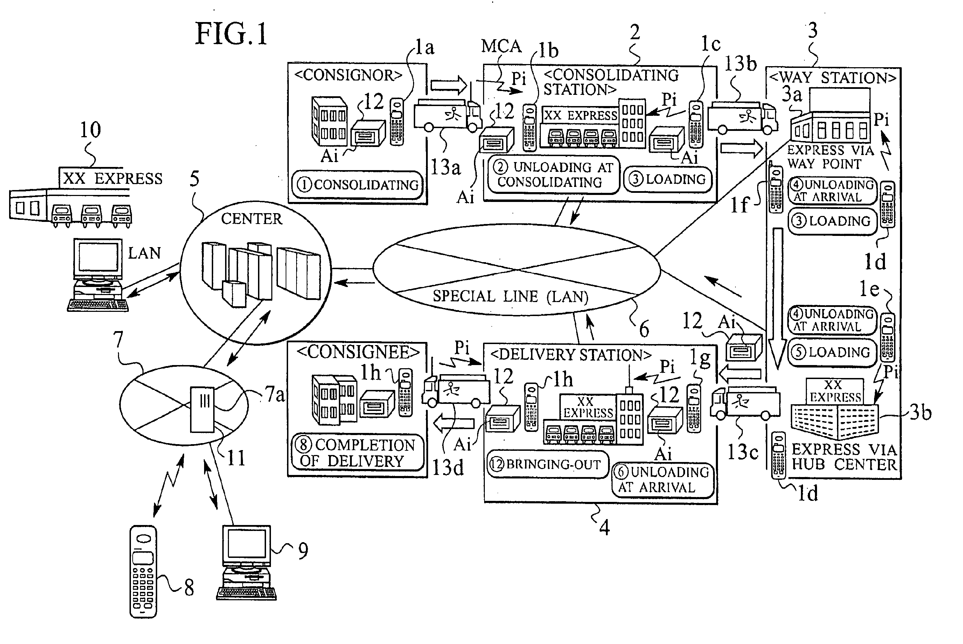

Fig. 1 is a schematic structural diagram of a cargo tracking system according to a first embodiment. In this cargo tracking system, drivers and stations have PDTs (Portable Data Terminal: corresponding to portable terminal of the present invention) 1a, 1b, .... A computer of a consolidating station 2a, a computer of a way station 3 (way station 3a or a hub center 3b), a computer of a delivery station 4 and a center 5 are connected by a special line 6. The PDTs 1a, 1b, ... transmit point information Pi, discussed later, to the respective stations using MCA (Multi-Channel Access) radio sets (corresponding to transmission device of the present invention). These computers transmit the point information Pi obtained by the PDTs 1a, 1b, ... each time when Pi is transmitted to the center 5 using the special line 6. Moreover, the special line 6 is connected with a host computer (corresponding to the point information management device of the present invention) of the center 5.

The host computer of the center 5 stores the point information Pi from the consolidating station 2, the way station 3 or the delivery station 4. The host computer of the center 5 provides point management information according to an access request from a personal computer at a branch office 10.

In addition, the host computer is connected with the internet 7 so as to provide point information according to access requests by a cellular phone 8 and a user's personal computer 9 via a web server 11.

Namely, in the cargo tracking system in the first embodiment, a current location of a cargo from a consignor can be easily found according to a consignment note number (inquiry number).

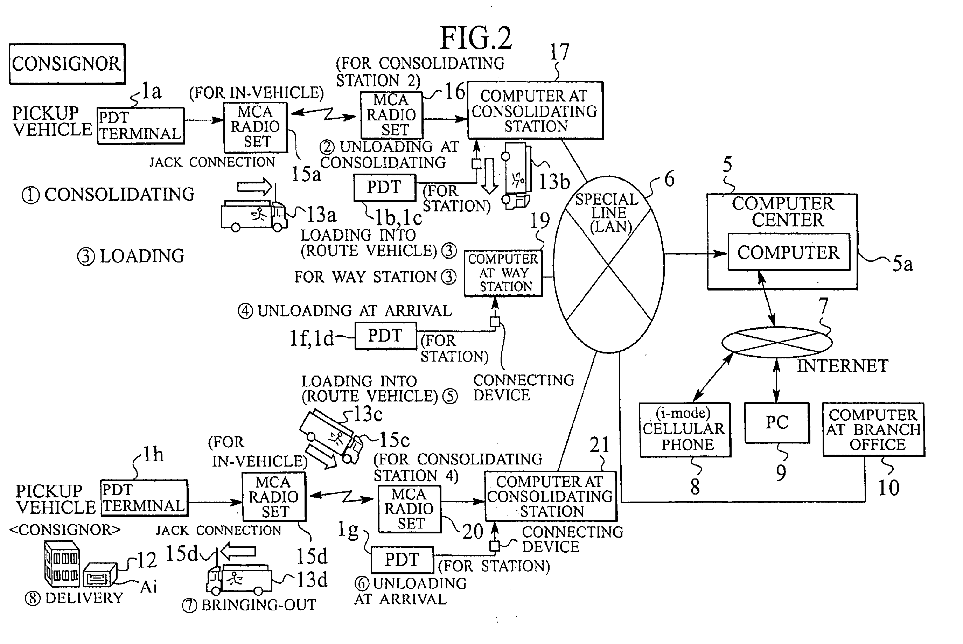

This cargo tracking system is, more concretely, composed of a network, computers and in-vehicle radio sets shown in Fig. 2. As shown in Figs. 1 and 2, a pickup vehicle 13a which carries a cargo 12 from a consignor to a consolidating station is equipped with an MCA radio set 15a.

Further, a delivery vehicle 13d which carries the cargo 12 from the delivery station to a consignee is equipped with an MCA radio set 15d.

As shown in Figs. 1 and 2, the consolidating station 2 is provided with an MCA radio set 16 (for the pickup station), and the MCA radio set 16 for the pickup station is connected with a computer 17 at the pickup station. Moreover, a way station 3 is provided with a computer 19 for the way station. As used herein, the term "way" station refers to any station between the shipping station and the final destination station.

Further, the delivery station 4 is provided with an MCA radio set 20 (for the delivery station), and the MCA radio set 20 is connected with a computer 21 for the delivery station.

When the MCA radio sets for vehicles are connected with the PDTs, the PDTs transmit obtained point data.

The above-mentioned pickup vehicle, a route vehicle and delivery vehicle are occasionally and generically referred to simply as pickup vehicles .

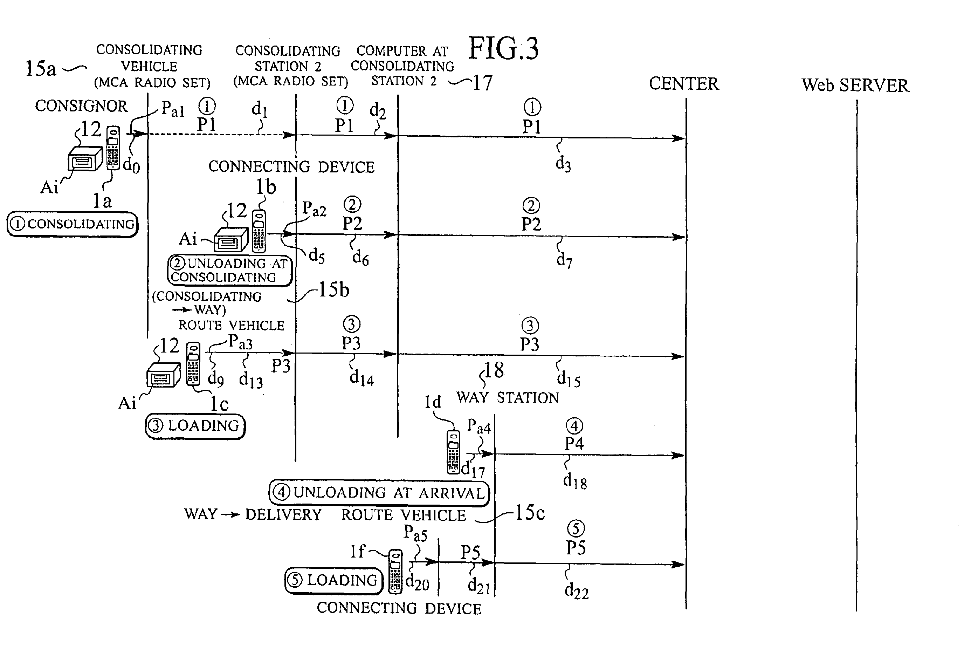

The cargo tracking system having the above structure will be explained with reference to the sequence of Figs. 3 and 4, and Figs. 1, 2, 5 and 6.

In this system, a driver who receives the cargo 12 from the consignor allows the PDT 1a shown in Figs. 1 and 2 to read a barcode of a consignment note Ai attached to the cargo 12 (consignment note number ai), and connects the MCA radio set 15a provided in the pickup vehicle 13a (also called a first pickup vehicle) to the PDT 1a so that PDT obtained output data Pa1 are transmitted to the MCA radio set 15a provided in the vehicle as shown in Fig. 3 (d0).

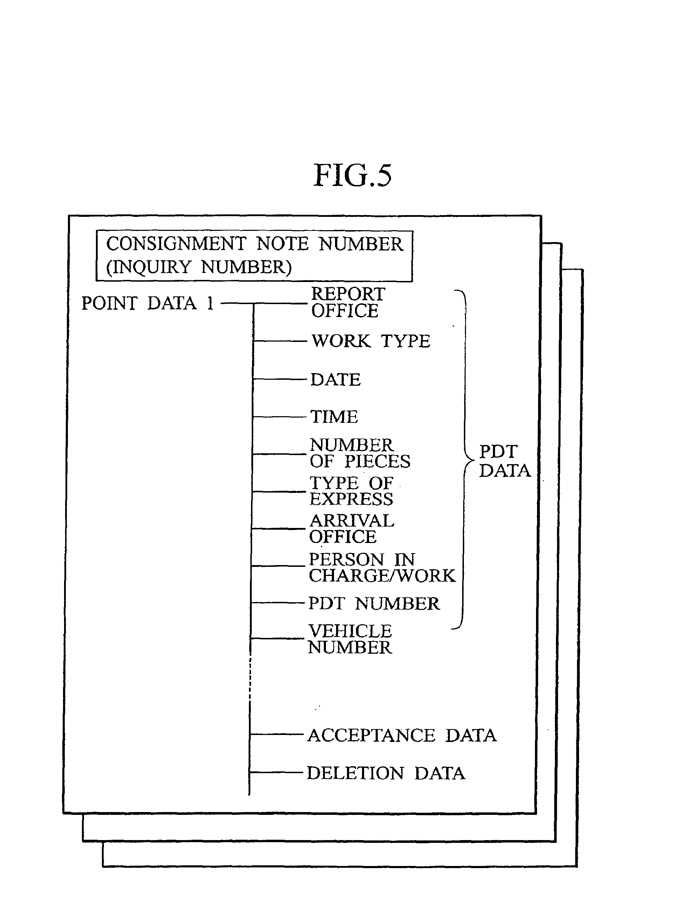

The PDT obtained output data Pa1 from the PDT 1a is, as shown in Fig. 5, comprisese at least date, time, PDT number, code of person in charge, branch office code (report office), consignment note number and work type code (type of work: loading, unloading, completion of delivery and the like).

Namely, the date, time, PDT number, code of person in charge, branch office code (report shop), consignment note number, work type code showing loading and the like are provided at the time of the loading of the cargo from the consignor into the pickup vehicle 13a.

Next, when the in-vehicle MCA radio set 15a is connected with the PDT 1a via a jack, the MCA radio set 15a transmits the PDT obtained data pa1 as point data P1 to the consolidating station 2 via a radio (d1). Namely, the MCA radio set 15a transmits the consignment note number, date, time, PDT number, code of person in charge, branch office code (report office), work type code showing loading, vehicle number (corresponding to an identification code of the vehicle in the present invention) and the like as point information at the time of loading the cargo from the consignor into the pickup vehicle 13a.

The MCA radio set 16 at the consolidating station 2 receives the point data P1 and transmits the point data immediately to the computer 17 at the consolidating station 2 (d2).

Next, the computer 17 at the consolidating station 2 temporarily stores the point data every time the point data are input, and transmits the point data to a host computer 5a at the center 5 via the special line 6 (d3). Namely, as shown in Figs. 1 and 3, the center 5 is informed that the cargo 12 from the consignor is loaded into the pickup vehicle 13a (in Figs. 1 and 2, (1)).

In addition, the computer 5a at the center 5 stores the consignment note number, date of shipment, shipping office, customer code and the like as acceptance data Pb.

A communication protocol between the computer 5a and the web server 7a is executed according to TCP/IP (Transport control Protocol / Internet Protocol).

Next, when the pickup car 15a arrives at the consolidating station 2 and the cargo 12a is unloaded, as shown in Figs. 1 and 2 the PDT 1b of the consolidating station 2 is operated by personnel (or the driver) so as to read the consignment note Ai of the cargo 12a therein. At this time, it is preferable that an unloading button (not shown) of the PDT 1b is activated.

When the PDT 1b is connected with a connecting device (not shown) of the consolidating station 2 via a jack, the PDT 1b transmits PDT obtained data Pa2, at the time of unloading the cargo, to the connecting device (d5). Namely, the PDT 1b transmits the date, time, PDT number, code of person in charge, branch office code (report office), consignment note number, work type code showing unloading, consolidating station number and the like as the point data p1 when the cargo is unloaded at the consolidating station 2.

In addition, the MCA radio set 1b at the consolidating station 2 is connected with the computer 17 at the consolidating station 2 by a special cable.

The connecting device which receives the PDT obtained data Pa2 at the time of unloading the cargo, transmits the PDT obtained data Pa2 as the point data P2 to the computer 17 at the consolidating station 2 (d6).

Next, the computer 17 at the consolidating station 2 inputs and temporarily stores the point data P2 so as to transmit the point data P2 to the host computer 5a at the center 5 via the special line 6 (d7). Namely, as shown in Figs. 1 and 3, it is posted to the center 5 that the cargo 12 from the consignor is unloaded at the consolidating station 2 (in Figs. 1 and 2, (2)).

Next, when the cargo 12 is loaded into a route vehicle 13b (also called a second pickup vehicle) which is headed from the consolidating station 2 to the way station 3, a driver of the route vehicle 13b allows the PDT 1c (for station) to scan the consignment note Ai of the cargo 12 and to transmit the PDT obtained output data Pa3 (d9).

As a result, the date, time, PDT number, code of person in charge, branch office code (report office), consignment note number and the like at the time of loading the cargo 12 into the route vehicle 13b headed from the consolidating station 2 to the way station 3 are obtained from the PDT 1c.

Next, the PDT obtained data Pa3 are transmitted as point data P3 to the computer 17 at the consolidating station (d13, d14).

Namely, the point data which shows the consolidating station and the route vehicle where the cargo is loaded are transmitted.

Next, the computer 17 at the consolidating station 2 inputs and temporarily stores the point data P3 so as to transmit the point data P3 to the host computer 5a at the center 5 via the special line 6 (d15). Namely, as shown in Figs. 1 and 3, it is posted to the center 5 that the cargo 12 from the consignor is loaded into the route vehicle 13b headed to the way station at the consolidating station 2 (in Figs. 1 and 2, (3)).

As for the way station 3, the route vehicle 13b occasionally goes through the hub center. It is also equipped with the PDT 1e, the radio set and the computer.

Next, when the route vehicle 13b which leaves the consolidating station 2 arrives at the way station 3 and the cargo 12 is unloaded, as shown in Figs. 1 and 2, the PDT 1d at the way station 3 is operated by personnel (or driver) so as to read the consignment note Ai of the cargo 12a. At this time, it is preferable that an unloading button (not shown) of the PDT 1d is activated to indicate an unloading operation..

When the PDT 1d is connected with a connecting device (not shown) at the way station 3 via a jack, the PDT 1d transmits PDT obtained data Pa2 at the time of unloading the PDT 1d (d17). Namely, the PDT 1d transmits the date, time, PDT number (1d), code of person in charge, branch office code (report office), consignment note number, work type code showing unloading, way station number and the like at the time of carrying the cargo from the consolidating station 2 and unloading it at the way station 3.

The connecting device, which receives the PDT obtained data Pa4 at the time of unloading the cargo at the way station, transmits point data P4 to the computer 19 at the way station 3 (d17).

Next, the computer 19 inputs and temporarily stores the point data P4 so as to transmit the point data P4 to the host computer 5a at the center 5 via the special line 6 (d18). Namely, as shown in Figs. 1 and 3, it is posted that the cargo 12 from the consignor is unloaded at the way station 3 (in Figs. 1 and 2, (4)).

Next, when the cargo 12 is loaded into a route vehicle 13c (one of the second pickup vehicles) which is headed from the way station 3 to the delivery station 4, after a driver or personnel allows the PDT 1f (for station) to scan the consignment note Ai of the cargo 12, the driver or personnel connects the PDT 1f with the connecting device via a jack so that PDT obtained output data Pa5 are transmitted (d20).

As a result, the date, time, PDT number (1f), code of person in charge, branch office cod (report office), consignment note number and the like at the time of loading the cargo 12 into the route vehicle 13c which is headed from the way station 3 to the delivery station 4 are obtained from the PDT 1f.

Next, the connecting device at this station transmits the PDT obtained data Pa5 as point data P5 to the computer 19 at the way station 3 (d21).

Namely, the point data, shows which cargo is loaded into which route vehicle headed from which way station to which delivery station, are transmitted.

Next, the computer 19 at the way station 3 inputs and temporarily stores the point data P5 so as to transmit the point data P5 to the host computer 5a at the center 5 via the special line 6 (d22). Namely, as shown in Figs. 1 and 3, it is posted to the center 5 that the cargo is loaded into the route vehicle 13c which is headed from the way station 3 to the delivery station 4 (in Figs. 1 and 2, (5)).

Next, when the route vehicle 15c arrives at the delivery station 4 and the cargo 12 is unloaded, as shown in Figs. 1 and 2 the PDT 1g at the delivery station 4 is operated by a person (or driver) so as to read the consignment note Ai of the cargo 12. At this time, it is preferable that an unloading button (not shown) of the PDT 1g is activated.

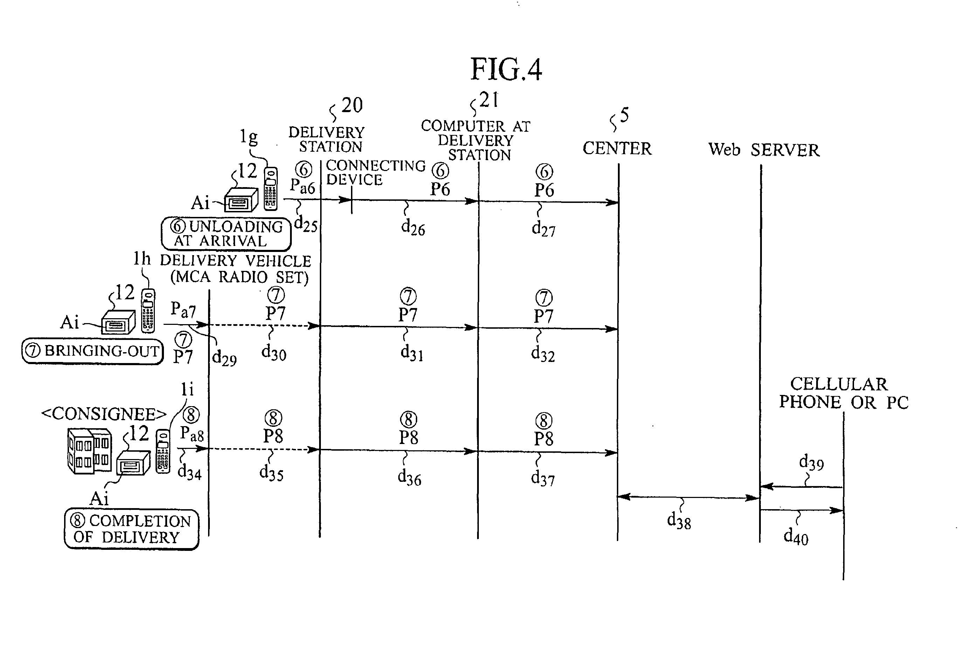

When the PDT 1g is connected with a connecting device at the delivery station 4 via a jack, as shown in Fig. 4 the PDT 1g transmits PDT obtained data Pa6 at the time of unloading the cargo (unloading at arrival) to the connecting device (not shown) (d25). Namely, the PDT 1g transmits the date, time, PDT number, code of person in charge, branch office code (report office), consignment note number, work type code showing unloading, delivery station number and the like as point data P6 at the time of carrying the cargo from the way station 3 and unloading it at the delivery station 4.

In addition, the MCA radio set 20 at the delivery station 4 is connected with the computer 21 at the delivery station 4 by a special cable.

The connecting device, which receives the PDT obtained data Pa6 a the time of unloading at arrival, transmits the PDT obtained data Pa6 as the point data P6 to the computer 21 at the delivery station 4 (d26).

Next, the computer 21 at the delivery station 4 inputs and temporarily stores the point data P6 so as to transmit it to the host computer 5a at the center 5 via the special line 6 (d27). Namely, as shown in Figs. 1 and 3, it is posted to the center 5 that the cargo 12 from the way station is unloaded at the delivery station 4 (in Figs. 1 and 2, (6)).

Next, when the cargo 12 unloaded at the delivery station 4 is loaded (brought out) into the pickup vehicle 13d which stands by at the delivery station 4, as shown in Figs. 1 and 2, the PDT 1h provided in the pickup vehicle 13d (or at the station) is operated by the driver so as to read the consignment note Ai of the cargo 12. At this time it is preferable that a loading button (not shown) of the PDT 1h is activated to indicate/record, a loading operation.

When the PDT 1h is connected with the MCA radio set 15d of the pickup vehicle 13d via a jack, the PDT 1h transmits PDT obtained data Pa7, at the time of bringing out the cargo, to the MCA radio set 15d (d29). Namely, the PDT 1h transmits the data, time, PDT number, code of person in charge, branch office code (report office), consignment note number, work type code showing loading and the like as point data P7 at the time of loading the cargo 12 into the pickup vehicle 13d.

Namely, the MCA radio set 15d which receives the PDT obtained data Pa7 at the time of bringing out transmits the PDT obtained data Pa7 as the point data P7 to the MCA radio set 20 at the delivery station 4 (d30).

The MCA radio set 20 at the delivery station 4 receives the point data P7 and immediately transmits it to the computer 21 at the delivery station 4 (d31).

Next, the computer 21 at the delivery station 4 inputs and temporarily stores the point data P7 so as to transmit the point data P7 to the host computer 5a at the center 5 via the special line 6 (d32). Namely as shown in Figs. 1 and 3, it is posted to the center 5 that the cargo 12 has been brought out from the delivery station 4 (in Figs. 1 and 2, (7)).

When the delivery vehicle 13d arrives at the consignee and the load 12 is unloaded to be handed to the consignee, as shown in Figs. 1 and 2, the driver of the delivery vehicle 13d operates the PDT 1h so that it can read/scan the consignment note Ai of the cargo 12. At this time, it is preferable that a delivery completion button (not shown) of the PDT 1h is activated to indicate/record delivery completion.

When the PDT 1h is connected with the MCA radio set 15d of the delivery vehicle 13d via a jack, the PDT 1h transmits PDT obtained data Pa8 at the time of completing the delivery to the MCA radio set 15d (d34). Namely, the date, time, PDT number (1h), code of person in charge, branch office code (report office), consignment note number, work type code showing completion of delivery and the like as PDT obtained output data Pa8 at the time of handing the cargo to the consignee are obtained.

The MCA radio set 15d, which receives the PDT obtained data Pa8 at the time of completion of the delivery, transmits the PDT obtained data Pa8 as point data P8 to the MCA radio set 20 at the delivery station 4 (d35).

The MCA radio set 20 at the delivery station 4 transmits the point data P8 to the computer 21 at the delivery station (d36) and to the host computer 5a at the center 5 (d37). Namely as shown in Figs. 1 and 3, it is posted to the center 5 that the cargo 12 has been delivered to the consignee (in Figs. 1 and 2, (8)).

Namely, the point data of the pickup vehicles (cargo) are successively stored in the host computer 5a at the center 5. For example as shown in Fig. 5, the point data (data including report office, work type, date, time, a number of cargos, delivery type, arrival shop and the like) linked to the consignment note number (inquiry number) are stored.

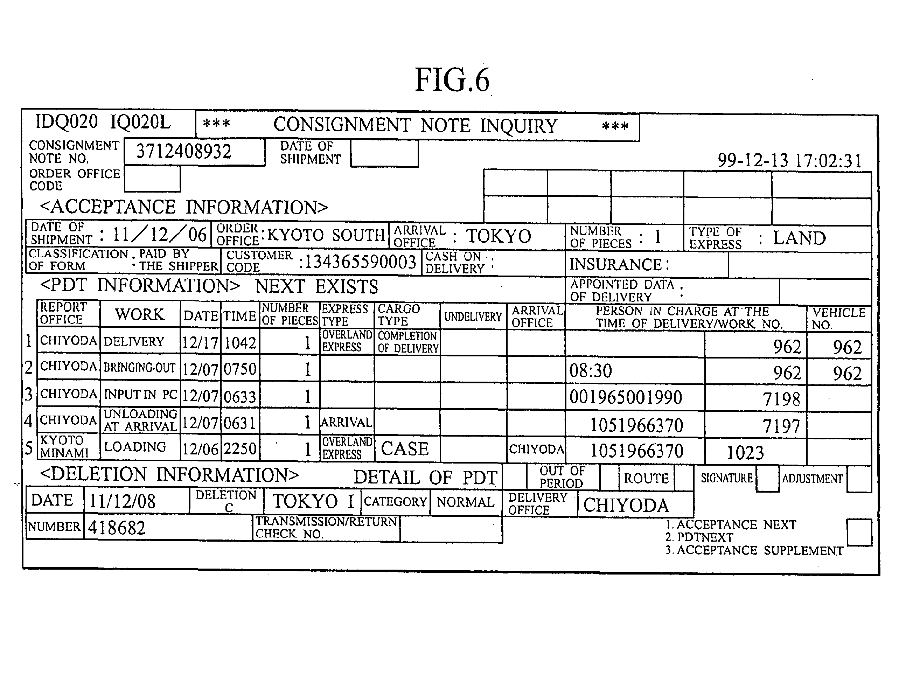

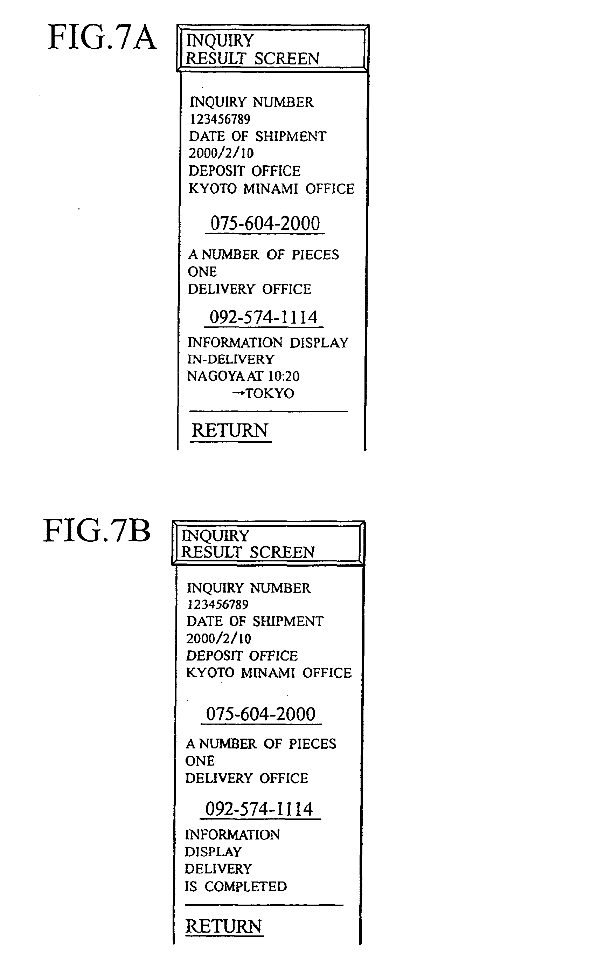

As shown in Fig. 4, for example, a cargo inquiry request and an inquiry number (although it is the consignment note number, the inquiry number is preferable because it indicates an inquiry from the user) are input into the web server 7a from the cellular phone 8 or the personal computer 9 of the consignor or the personal computer 10 at the branch office (d39), the web server 7a executes a connecting step with the host computer 5a at the center (d38) and allows the host computer 5a to provide express point management information shown in Figs. 6 and 7 linked with the consignment note number (d40).

An express point management information screen in Fig. 6 is, for example, a screen for the personal computer 10 at the branch office, and it comprises acceptance information, PDT information and deletion information. On this screen, PDT record data at the most recent stage are used as the latest point data. Namely, in the branch office, it is determined as to who delivers the cargo to the consignee through which route and how long the deliver takes.

In addition, since the screen in Fig. 6 provides information as to where the pickup vehicle (cargo) is, when this screen is provided from the web, a current location of the cargo is immediately determined.

For this reason, when the consignor makes an inquiry and the screen in FIG 6 is displayed, the location of the cargo can be immediately determined, and arrival time is estimated so as to be capable of being informed.

In addition, Fig. 7 corresponds to a portable terminal (i-mode) of a user or the personal computer of a user, and when an inquiry request of and an inquiry number on a menu screen (not shown) of the web server 7a are input, the web server provides a screen as in Fig. 7.

Fig. 7(a) shows an in-delivery state, and information as to a current location of the cargo. In Fig. 7(a), for example, information is provided that the cargo is headed from "Nagoya" to "Tokyo" at "10:20". Fig. 7(b) shows completion of the delivery. The point management information is provided in such a manner that the web server collects the point data successively transmitted from the center.

### Embodiment 2

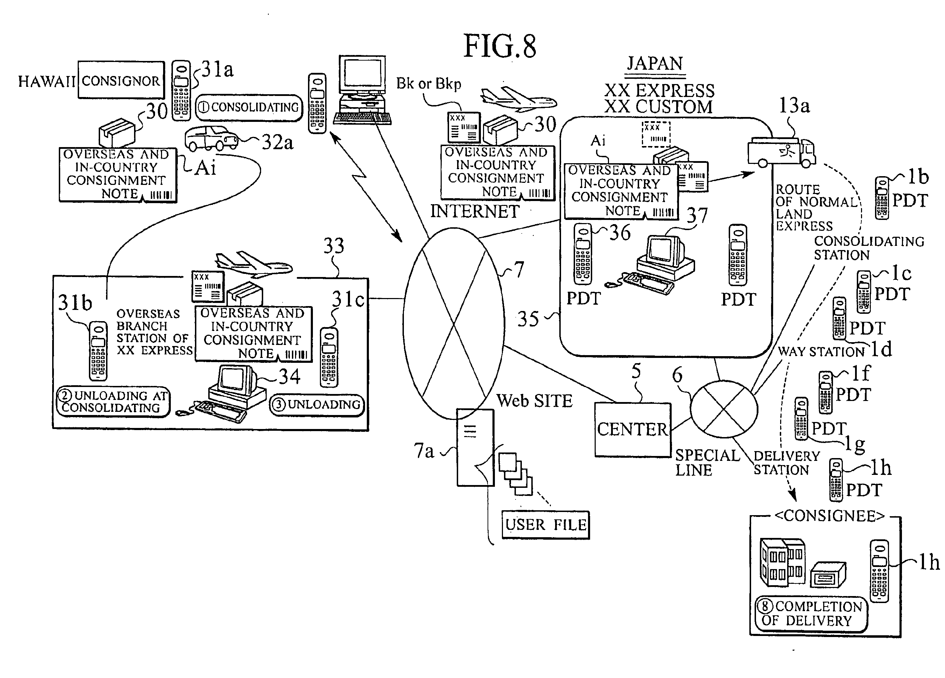

Fig. 8 is a schematic structural diagram of the cargo tracking system according to a second embodiment. The cargo tracking system according to the second embodiment can inform overseas and an in-country user about a current location of a cargo, and the overseas and in-country cargo tracking systems have the same structure. However, in the present embodiment, a consolidating station is not shown, but only overseas stations in airports are shown.

Namely, as shown in Fig. 8, a driver who receives a cargo 30 from an overseas consignor operates the PDT 31a so that it read/scans a barcode of the consignment notes of the cargo 30 so as to obtain PDT output data Pa.

Namely, the PDT obtained output data, which comprises at least the date, time, PDT number (31a), code of person in charge, branch office code (report office), consignment note number, and work type code (loading), are obtained.

When the cargo is consolidated by a pickup vehicle 32 and the PDT 31a is connected with a computer 34 with a jack at an overseas branch station 33, the PDT 31a adds a station number at the overseas branch station to point data P so as to transmit the point data P to the computer 34. Namely, the PDT 31a transmits information (date, time, PDT number, code of person in charge, branch office code, consignment note number, work type code showing loading, vehicle number (radio set number) and the like) at the time of loading the cargo from the overseas branch station into the pickup vehicle 32a and the time the pickup vehicle 32a leaves.

In the overseas branch station 33, entry documents Di for exit to which the consignment note number is added and a common tag are prepared and printed so as to be transmitted.

Next, when the pickup vehicle 31a arrives at the overseas branch station 33 and the cargo 30 is unloaded, a PDT 31b provided at the overseas branch station 33 is operated by personnel (or a driver) so as to read the consignment note of the cargo 30. At this time, it is preferable that a unloading button (not shown) of the PDT 31b is activated to indicate unloading.

When the PDT 31b is connected with a connecting device at the overseas branch station 33 via a jack, the PDT 31b transmits PDT obtained data at the time of unloading the cargo and the computer 34 at the overseas branch station receives the PDT obtained data.

Namely, the PDT 31b transmits the date, time, PDT number, code of person in charge, branch office code, consignment note number, work type code showing unloading and the like as point data at the time of unloading the cargo 30 from the overseas consignor at the overseas branch station 33.

Next, when the cargo 30 is loaded into an aircraft, a personnel at the overseas branch station operates a PDT 31c so that PDT 31c reads/scans the consignment note number and presses a button which shows that the cargo is loaded into the aircraft. PDT obtained output data are transmitted to the overseas branch station 33.

When the aircraft arrives at Japan, the consignment note number of the cargo 30 is read by a PDT 36 by personnel of XX shipping company at a Japanese custom office 35, and the consignment note number is transmitted to a computer 37 at the Japanese custom office 35 and to the center 5. Namely, the arrival information of the cargo 30 at Japan is transmitted.

When entry papers for entry are prepared in Japan and the cargo 30 is put into a Japanese delivery route, the PDT 1a of the driver of the pickup vehicle 13a in Japan is operated so as to transmit consignment note number, work type code showing loading and the like to the custom office, and it is transmitted by the computer 37 to the center 5 via the special line 6.

Thereafter, similarly to the first embodiment, the cargo 30 is delivered to the consignee in Japan via the route in Japan including the consolidating station, the way station and the delivery station, as previously described.

At this time, the consignment note number, vehicle number, radio set number, time and the like are transmitted as point information to the center 5 by the PDT 1b, PDT 1c, PDT 1d, PDT 1f, PDT 1h and the MCA radio sets at the respective stations and of the drivers of the vehicles.

In addition, the computer 5a at the center allows the Web server 7a to transmit the point information in the computer 34 at the overseas station, and after the center 5 stores the point information, the web server 7a accepts an inquiry request from a user. When an inquiry is made, the screen in Fig. 7 is provided to the user, and the more detailed point management information screen in Fig. 6 is provided to the branch office (in overseas or in Japan).

Therefore, both overseas and in-country users or an operator at the branch offices can access the web server so as to be capable of easily knowing a current location of the cargo.

### Embodiment 3

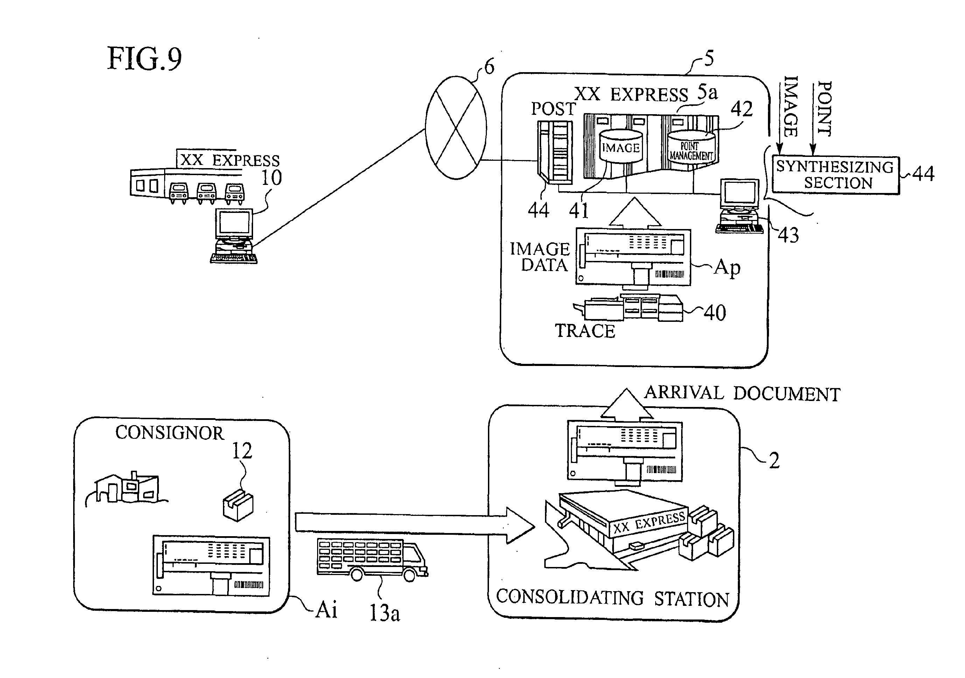

Fig. 9 is a schematic structural diagram of the cargo tracking system according to a third embodiment. In the present embodiment, a trace device 40, a personal computer 43, a host computer 5a and a communication control device 44 are connected by a LAN. Moreover, the communication control device 44 is connected to the special line 6.

Further, the special line 6 is connected with the personal computer 10 at the branch office by a communication device (not shown). Moreover, the cargo tracking system of the present embodiment is connected with the internet, but in this embodiment, the connection is not shown in Fig. 9.

Namely, in the cargo tracking system according to the third embodiment, the driver of the pickup vehicle 13a receives the cargo 12 from the consignor (or 24-hour store or the like) to which the consignment note Ai is attached and loads the cargo 12 into the pickup vehicle 13a so as to carry it to the consolidating station 2. One copy of a book having a plurality of consignment notes Ai (hereinafter, referred to as arrival document Aip) is carried to the center 5 and is traced by the trace device 40 so as to be converted into image data Ei.

The image data Ei are linked with the consignment note number in an image file 41 in the host computer 5a so as to be stored. Moreover, the point data of the cargo 12 at each point are stored in a point management file 42 in the host computer 5a. In addition, the computer 43 which is connected with the host computer 5a at the center 5 has a synthesizing section 44.

When an operator inputs the consignment note number (inquiry number) and a point management information request with an image into the synthesizing section 44, the synthesizing section 44 draws the image data Ei corresponding to the consignment note number from the image file 41 and draws point management information PH from the point management file 42.

The synthesizing section 44 extracts image data ek of an area comprising a consignor column and a consignee column in the image data Ei of the drawn consignment note and synthesizes the image data ek with the drawn point management information PH so as to display the synthesized information on a screen.

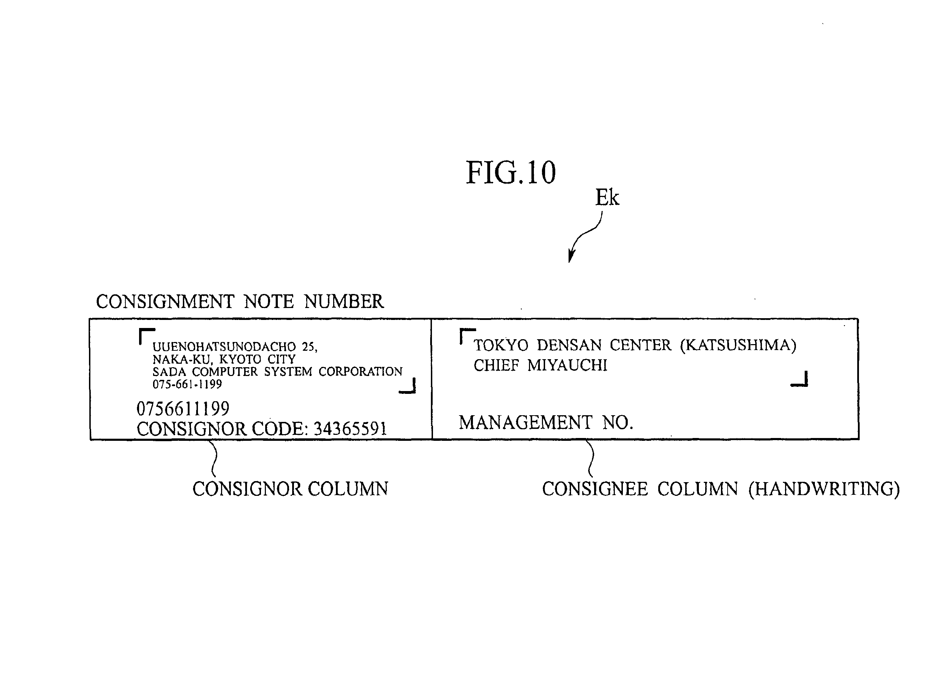

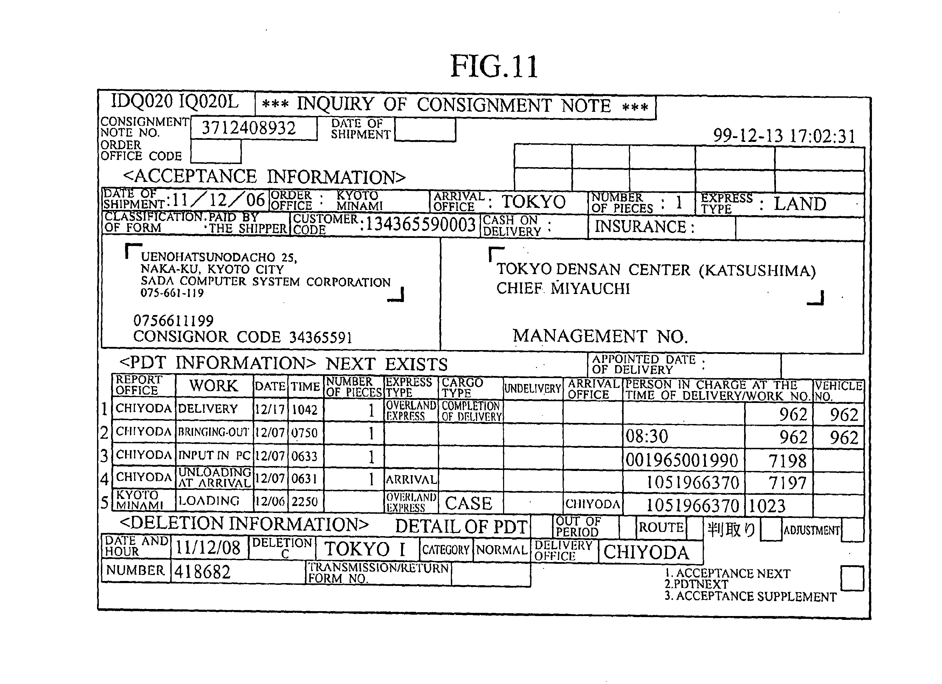

For example, in the case of the image data ek of Fig. 10 and the point information of Fig. 6, the synthesized point management information is as shown in Fig. 11.

Therefore, in the case where the cargo 12 from the consignor does not arrive at the consignee due to any cause, the operator can confirm the address and name of the consignor and the address and name of the consignee in the document Ai (consignment note) which the consignor fills in.

Here, in the above embodiments, the unloading at the stations is executed by the PDTs at the stations, but the driver may input a branch office code into the PDTs so as to unload the cargo at that location.

### Industrial Applicability

According to the present invention, when the consignment note of the cargo from the consignor is received and the cargo is loaded into the pickup vehicle, is unloaded at a station, is loaded into the pickup vehicle headed from the station to a next station or is delivered to the consignee, the pickup vehicle or the work type at the station (reception, loading, unloading, delivery and the like) and the consignment note number at this time are transmitted as point information.

The point information is successively stored in the order of the reception as point management information, so as to be provided in a predetermined form via a communication network of a requesting source.

For this reason, when an inquiry is made, a user or an operator can known as to where the cargo is based on information a screen at anytime.

In addition, according to the cargo tracking system of the present invention, work types of the respective work (reception, loading, unloading, delivery and the like) and the consignment note number are obtained as the point information from the portable terminals provided to the drivers of the pickup vehicles and the stations where loading, unloading or delivery of the cargo occurs. The point information is transmitted to the point information management device, so as to be stored as the point management information therein.

When the user or operator makes a request about the consignment note number and the point management information, the point management information is provided in a predetermined form to the terminal which has made the request.

For this reason, when an inquiry is made, the user or the operator can easily know where the cargo is based on information displayed on the screen at anytime.

## Claims

1. A cargo tracking method of tracking locations of a cargo to which consignment notes prepared by an in-country or overseas consignor are attached when the cargo is delivered to a consignee identified in the consignment notes while the cargo is being loaded into or unloaded from pickup vehicles at respective stations, the cargo tracking method comprising:
a point information transmitting step of transmitting consignment note number and work type showing loading or unloading at the vehicles or at the stations as point information each time the cargo is loaded into the pickup vehicles or is unloaded at the stations;
a point management information creating step in which the stations receive each of the point information and relates the point information to the consignment note number in the corder of reception at the point information so as to store the point information and the point information is point management information of each consignment note; and
a point information providing step of, when a request of the point management information of the consignment note number is made, providing the point information of the consignment note number requested through a communication network used by a requesting source in a predetermined form.

2. The cargo tracking method according to claim 1, wherein
the point information transmitting step includes a loading transmission step, an unloading transmission step and a delivery completing step,
the loading transmission step transmits consignment note number, branch office code of the pickup vehicles, date, time and work type code at the time of loading as first point information to each of the pickup vehicles each time the cargo is loaded into the pickup vehicles,
the unloading transmission step transmits consignment note number of the cargo, branch office code, date, time and work type code at the time of unloading as second point information to each of the stations when the cargo is unloaded from the pickup vehicles, and
the delivery completing step transmits the consignment note number of the cargo, date, time, branch office code at delivery stations and work type code at the time of delivery as third point information when the cargo is delivered to the consignee.

3. The cargo tracking method according to claim 2, wherein
the loading transmission step includes a first step for receiving the cargo from the consignor and a second step provided at the stations;
in the first step, after a first pickup vehicle receives the cargo from the consignor and the cargo is loaded therein, the first point information is transmitted from the first pickup vehicle,
in the second step, after the cargo is unloaded at a station at which the first pickup vehicle arrives, a second pickup vehicle loads the cargo at the station, and the first point information is transmitted.

4. The cargo tracking method according to claim 2, wherein
when the pickup vehicles have identification codes, the identification codes are added to first or third point information.

5. The cargo tracking method according to claim 1, wherein
the point management information creating step creates image data comprising a consignor column and a consignee column of the consignment note, and creates point management information obtained by synthesizing the image data and the point information of the consignment note.

6. A cargo tracking system for collecting data at the time of loading or unloading a cargo into pick up vehicles at each of a plurality of stations to which a consignment note prepared by an in-country or overseas consignor is attached via a network and tracking a location of the cargo from the collected data when the cargo is delivered to a consignee identified in the consignment note, the cargo tracking system comprising:
a plurality of portable terminals provided to drivers for the respective pickup vehicles and stations by whom and where the cargo is loaded, unloaded or delivered, the portable terminals obtaining a consignment note number of the cargo, work types showing loading or unloading at the pickup vehicles or the stations as point information at the time of loading, unloading and delivering the cargo;
a transmission device provided for each of the vehicles and each of the stations, the transmission device transmitting the point information obtained by the portable terminals every time when the portable terminals are connected to the transmission device;
a point information management device connected to the network for receiving the point information from the transmission devices at the stations or the pickup vehicles and relating the point information to the consignment note number so as to store the point information in an order of reception, and transmitting the point management information to the network; and
a server connected to the network for storing the point management information from the point management device and when the consignment note number and the point management information are requested, providing the point management information in a predetermined form to a terminal where the request is made.

7. The cargo tracking system according to claim 6, wherein
the network is a special line and an internet, the server configured to be connected with the internet, the point information management device provided so as to be connected to the special line and the internet, and the point information management device makes a judgment as to completion of the delivery or in-delivery from the point management information and transmits the resulted information, date, time, consignee and consignment note number to the server connected to the internet.

8. The cargo tracking system according to claim 6 or 7, wherein
the point information management device is provided to a center, obtains image data of the consignment note, relates the image data to the consignment note number so as to store the data, and creates point information management data which are obtained by synthesizing images of a consignor column and a consignee column in the image data with all point information relating to the consignment note number so as to provide the point information management data to a predetermined terminal.

9. The cargo tracking system according to claim 6, 7 or 8, wherein
after the point information of the cargo from the overseas consignor is transmitted to the server connected to the internet and the point information management device captures the point information of the server, the point information management device makes a judgment as to completion of delivery or delivery-in-process from the point management information, and transmits the resulted information, date, time, consignor and consignment note number to the server.
